(19) Europäisches Patentamt
European Patent Office
Office européen des brevets

(11) **EP 1 504 541 B1**

(12) **EUROPÄISCHE PATENTSCHRIFT**

(45) Veröffentlichungstag und Bekanntmachung des Hinweises auf die Patenterteilung:
**04.07.2012 Patentblatt 2012/27**

(21) Anmeldenummer: **03729861.9**

(22) Anmeldetag: **05.05.2003**

(51) Int Cl.:
***H04B 1/7115*** (2011.01)

(86) Internationale Anmeldenummer:
**PCT/DE2003/001428**

(87) Internationale Veröffentlichungsnummer:
**WO 2003/096564 (20.11.2003 Gazette 2003/47)**

(54) **Rake-Demodulator mit Multicode-Finger**

Rake-demodulator with multicode-finger

Démodulateur rake à doigts multicode

(84) Benannte Vertragsstaaten:
**DE FR GB**

(30) Priorität: **10.05.2002 DE 10220906**

(43) Veröffentlichungstag der Anmeldung:
**09.02.2005 Patentblatt 2005/06**

(73) Patentinhaber: **Infineon Technologies AG**
**85579 Neubiberg (DE)**

(72) Erfinder:
• **BECKER, Burkhard**
**85737 Ismaning (DE)**
• **DREWES, Christian**
**80538 München (DE)**
• **HAAS, Wolfgang**
**A-2380 Perchtoldsdorf (AT)**
• **HERNDL, Thomas**
**A-2362 Biedermannsdorf (AT)**
• **HOFSTÄTTER, Michael**
**2380 Perchtoldsdorf (AT)**
• **NIEDERHOLZ, Jürgen**
**47647 Kerken (DE)**
• **ZIMMERMANN, Manfred**
**81539 München (DE)**

(74) Vertreter: **Graf Lambsdorff, Matthias**
**Lambsdorff & Lange,**
**Patentanwälte,**
**Dingolfinger Strasse 6**
**81673 München (DE)**

(56) Entgegenhaltungen:
**EP-A- 1 178 614 WO-A-03/052954**

• **TERO OJANPERÄ, RAMJEE PRASAD:**
**"Wideband CDMA for Third Generation Mobile Communications" , ARTECH HOUSE , USA XP002256633 Seite 287, Absatz 1 Seite 283, Absatz 3 Seite 122, Zeile 26 - Zeile 30 Seite 128, Absatz 4 Abbildung 5.15 Seite 290, Absatz 3 Abbildung 10.7**

EP 1 504 541 B1

**Beschreibung**

Die Erfindung betrifft einen Rake-Demodulator zur Demodulation von der Mehrwege-Ausbreitung unterliegenden spreizcodierten Signalen mehrerer physikalischer Kanäle sowie einen Rake-Empfänger, der einen solchen Rake-Demodulator einsetzt.

Im Mobilfunk unterliegen Funksignale der Mehrwege-Ausbreitung, d.h. durch Reflexion, Streuung und Beugung des gesendeten Funksignals an diversen Hindernissen im Ausbreitungsweg treten am Empfänger mehrere Empfangssignalversionen auf, die zeitlich zueinander verschoben und unterschiedlich abgeschwächt sind. Das Funktionsprinzip eines Rake-Empfängers beruht darauf, zumindest die energiereichsten Empfangssignalversionen getrennt auszuwerten und dann zeitrichtig zu überlagern. Die Bezeichnung Rake (Rechen) beschreibt dabei in bildhafter Weise die Struktur eines solchen Empfängers, wobei die Zinken des Rechens die Rake-Finger repräsentieren und der Stiel des Rechens das ausgangsseitig bereitgestellte überlagerte Empfangssignal darstellt.

Typischerweise besteht ein Mobilfunknetz aus vielen Basisstationen, welche eine flächige Funkabdeckung gewährleisten. Der mobile Empfänger muss dabei einerseits in der Lage sein, die Nutzdaten von mehreren Basisstationen gleichzeitig zu empfangen und zum Erzielen eines Diversitätsgewinns zu kombinieren, und andererseits muss er mehrere Basisstationen gleichzeitig beobachten bzw. überwachen, um das Ressourcenmanagement des Mobilfunknetzes zu unterstützen, z.B. damit ein Handover von einer Basisstation zu einer anderen ordnungsgemäß abgewickelt werden kann.

Ein weiterer grundlegender Aspekt von Mobilfunksystemen betrifft die Organisation des Vielfachzugriffs (Multiple Access). CDMA-(Code Division Multiple Access-) Systeme wie beispielsweise UMTS (Universal Mobile Telecommunication System) verwenden sogenannte Spreizcodes, die den auszusendenden Symbolen aufgeprägt werden und diese anschaulich gesprochen in Art eines Fingerabdrucks voneinander unterscheidbar machen. Neben der Spreizcodierung von teilnehmerspezifischen Daten werden auch Daten, die für mehrere Empfänger bestimmt sind (d.h. systemrelevante Daten) bandgespreizt. Zusätzlich werden bei UMTS-Systemen die gespreizten Daten mit einer Basisstations-spezifischen Scrambling-Sequenz multipliziert.

Die Signalübertragung von einer Basisstation zu einer Mobilstation (Downlink) sowie von einer Mobilstation zu einer Basisstation (Uplink) erfolgt über sogenannte physikalische Kanäle. Die physikalischen Kanäle eines Mobilfunksystems sind durch Standardisierung vorgegeben. Jeder physikalische Kanal ist durch eine bestimmte Trägerfrequenz, Vorschriften für die Spreizcodierung und eine bestimmte Datenstruktur gekennzeichnet. Man unterscheidet zwischen dedizierten physikalischen Kanälen, über welche teilnehmerspezifische Daten gesendet werden, und gemeinsamen physikalischen Kanäle, über welche für alle Teilnehmer bestimmte Daten übertragen werden. Die in UMTS vorgesehenen physikalischen Kanäle sind in der Spezifikation 3GPP TS 25.211 V4.2.0 (2001-09) definiert.

Die über die verschiedenen physikalischen Kanäle übertragenen Daten werden alle von dem Rake-Empfänger demoduliert. Für jeden zu demodulierenden physikalischen Kanal müssen dabei die entsprechenden zeitlichen Verzögerungen der MehrwegeKomponenten bestimmt und einzelnen Fingern des Rake-Empfängers zugeordnet werden. Die Rake-Finger, die zeitlich justierbare Spreizcode-Korrelatoren sind, werden dabei auf die ermittelten Mehrwege-Verzögerungen des empfangenen Signals eingestellt und mit dem jeweiligen Spreizcode des zu demodulierenden physikalischen Kanals betrieben. Die Ausgänge der Rake-Finger werden anschließend kombiniert und liefern das gesuchte Signal.

Bei gleichzeitigem Empfang von zwei oder mehreren physikalischen Kanälen müssen weitere Rake-Finger aktiviert, zeitlich justiert, mit den kanalspezifischen Spreizcodes betrieben und ihre Ausgänge kanalweise kombiniert werden.

Die aus der Gesamtheit der Rake-Finger bestehende Struktur wird im Folgenden als Rake-Demodulator bezeichnet. Konventionelle Rake-Demodulatoren bestehen aus einer Mehrzahl gleichartig aufgebauter, zueinander parallel angeordneter Rake-Finger. Prinzipiell lassen sich alle von dem Empfänger durchzuführenden Aufgaben (Datenempfang, Empfang von Kontrollinformationen und Durchführung von Messungen) mit einem derartigen konventionellen Rake-Demodulator lösen.

In dem Textbuch "Wideband CDMA for Third Generation Mobile Communications", T.Ojanperä, R. Prasad, ARTECH HOUSE, 1998, Seiten 127-129, 283, 287-290, ist ein Rake-Demodulator mit mehreren Rake-Fingern beschrieben. Die Rake-Finger umfassen Korrelatoren, mittels welchen die diesem Rake-Finger zugeordnete Wegekomponente der übertragenen Signale parallel mit mehreren Spreizcodes demoduliert werden kann. Ferner ist in Fig. 10.7 der Schrift ein Mehrkanal-Rake-Finger beschrieben, welcher in paralleler Anordnung einen Korrelator für die Demodulation eines Pilotkanals und einen Korrelator für die Demodulation eines Datenkanals aufweist.

In der Schrift EP 1 178 614 A2 ist ein CDMA-Empfänger mit einem Rake-Demodulator beschrieben, welcher aus mehreren Empfangsblöcken besteht. Die blockweise Gliederung des Rake-Demodulators korrespondiert mit dem Dienstetyp, d.h. jedem Block ist ein bestimmter Dienst oder Dienstetyp zugeordnet. So werden in einem ersten Block Paketdaten verarbeitet, in einem zweiten Block Hochgeschwindigkeitsdaten verarbeitet und in einem dritten Block Sprach- oder Niedergeschwindigkeitsdaten verarbeitet.

Ausgehend von diesem Stand der Technik liegt der Erfindung die Aufgabe zugrunde, einen Rake-Demodulator mit reduziertem Hardware-Aufwand zu schaffen. Darüber hinaus soll der Rake-Demodulator im Fall des gleichzeitigen Empfangs mehrerer physikalischer Kanäle in einfacher Weise konfigurierbar sein und unterschiedliche Datenverarbeitungs- und Meßaufgaben des Empfängers unterstützen.

Die der Erfindung zugrunde liegende Aufgabenstellung wird durch die Merkmale des Anspruchs 1 gelöst.

Erfindungsgemäß weist der Rake-Demodulator zumindest einen oder mehrere erste und einen oder mehrere zweite Multicode-Rake-Finger und Mittel, welche eine Zuordnung zwischen den Signalen der verschiedenen physikalischen Kanäle und den Multicode-Rake-Fingern bewirken, auf. Ein Multicode-Rake-Finger umfasst jeweils eine Einheit zur Einstellung der gemeinsamen Wegeverzögerung für den Multicode-Rake-Finger und eine Mehrzahl parallel angeordneter Korrelatoren, mittels welchen der diesem Rake-Finger zugeordnete Ausbreitungsweg der übertragenen Signale parallel mit mehreren Spreizcodes demodulierbar ist. Durch diesen Aufbau wird erreicht, dass die über einen Ausbreitungsweg übertragenen Signale jeweils einer parallelen Mehrfach-Korrelation unterzogen werden. Damit kann jeder Multicode-Rake-Finger mehrere physikalische Kanäle (genauer: einen bestimmten Ausbreitungsweg derselben) gleichzeitig demodulieren, wobei hierfür nur eine einzige gemeinsame Einheit zur Einstellung der Wegeverzögerung in dem Multicode-Rake-Finger benötigt wird. Diese Einheit stellt die Verzögerungszeitlage des gesamten Multicode-Rake-Fingers ein und bewirkt somit in Hardware-günstiger Weise die richtige zeitliche Justierung von mehreren im Multicode-Rake-Finger zu demodulierenden Signalen.

Ein weiterer Vorteil besteht darin, dass Ausbreitungswegbezogene Datenverarbeitungs- und Meßaufgaben durch den erfindungsgemäßen Demodulator einfacher organisiert und durchgeführt werden können, da in dem Multicode-Rake-Finger Signale mehrerer physikalischer Kanäle, die über den gleichen Ausbreitungsweg übertragen werden, zusammengefasst sind.

Ferner kennzeichnet sich der erfindungsgemäße Rake-Demodulator dadurch, dass dieser die Mittel Nutzdatenkanäle stets dem ersten Multicode-Rake-Finger zuteilen und Kontrollinformationskanäle stets dem zweiten Multicode-Rake-Finger zuteilen. Der zweite Multicode-Rake-Finger muss daher nicht für den Nutzdatenempfang ausgelegt sein und kann somit konstruktiv einfacher gestaltet sein. Der erste Multicode-Rake-Finger ist von der Verarbeitung von Kontrollinformationsdaten befreit. Es erfolgt also durch geeignete Maßnahmen (festverdrahtete Schaltung oder Programmierung eines Prozessors) eine fingerspezifische Kanalzuweisung, welche es ermöglicht, eine Aufgabentrennung zwischen den Multicode-Rake-Fingern vorzunehmen. Eine Aufgabentrennung wird ermöglicht, weil praktisch alle in einem Mobilfunkempfänger durchzuführenden Datenverarbeitungsaufgaben (z.B. Datenempfang, die Ermittlung allgemeiner system- und zellenspezifischer Informationen, Akquisitionsinformationen, Paging-Informationen, Leistungs-Messungen) auf Daten beruhen, die nur über bestimmte, hierfür vorgesehene physikalische Kanäle übertragen werden. Der zweite Multicode-Rake-Finger, der aufgrund des erfindungsgemäßen Zuordnungskonzeptes ein Signal eines Nutzdatenkanals niemals demodulieren wird, muss auch die mit dem Nutzdatenkanal verbundenen Datenverarbeitungsaufgaben nicht unterstützen. Damit eröffnet sich die Möglichkeit einer baulichen Vereinfachung der zweiten Multicode-Rake-Finger. Neben den möglichen konstruktiven Vereinfachungen der ersten bzw. zweiten Multicode-Rake-Finger ergibt sich noch ein weiterer wesentlicher Vorteil: Aufgrund der Tatsache, dass spezielle im Mobilfunkempfänger zu bewältigende Aufgabenstellungen nunmehr fest bestimmten Hardware-Bereichen des Rake-Demodulators zugeordnet sind (nämlich entweder dem ersten Multicode-Rake-Finger oder dem zweiten Multicode-Rake-Finger), wird auch eine Verringerung der Gesamtkomplexität der Systemarchitektur ermöglicht. Dem liegt zugrunde, dass heutige Mobilfunkempfänger neben dem Rake-Demodulator und einem digitalen Signalprozessor (DSP), welcher für die Weiterverarbeitung der von dem Rake-Demodulator gelieferten Daten zuständig ist, auch weitere dedizierte Hardware-Einheiten (sogenannte "Peripherals") umfassen, welche ebenfalls speziellen Datenverarbeitungsaufgaben zugeordnet sind. Diese Hardware-Einheiten, deren Zweck darin besteht, rechenintensive Algorithmen aus dem Prozessor "auszulagern" und dadurch eine hohe Rechengeschwindigkeit des Gesamtsystems bei verringerter Leistungsaufnahme des Prozessors zu erreichen, können nun fest mit den in Hinblick auf die Datenverarbeitungsaufgabe korrespondierenden Multicode-Rake-Fingern gekoppelt werden. Anschaulich gesprochen wird durch die Erfindung das Konzept einer aufgabenspezifischen Ausgestaltung der Empfänger-Hardware in den Rake-Demodulator fortgesetzt.

Erfindungsgemäß weist ein Multicode-Rake-Finger einen Pilotsignal-Korrelator auf, welchem das Mittel zum Zuordnen der zu demodulierenden Signale einen Spreizcode zur Demodulation von im Empfänger bekannten Pilotdaten eines übertragenen Pilotsignals zuordnet, während der bzw. die restlichen Korrelatoren des Multicode-Rake-Fingers mit einem Spreizcode bzw. mit Spreizcodes zur Demodulation von im Empfänger unbekannten Daten betrieben werden. Da die (für jeden Ausbreitungsweg durchzuführende) Kanalschätzung anhand von Pilotdaten durchgeführt wird (es werden hierfür die im Empfänger bekannten Pilotdaten mit den empfangenen Pilotdaten verglichen), demoduliert ein solcher Multicode-Rake-Finger neben den gewünschten unbekannten Daten gleichzeitig die Rohdaten für die Kanalschätzung. Damit ist insbesondere auch dann, wenn Pilotdaten sowohl in einem dedizierten physikalischen Kanal als auch in einem gemeinsamen physikalischen Kanal gesendet werden, und die Kanalschätzung auf der Auswertung der Pilotdaten beider Kanäle beruht, stets gewährleistet, dass sämtliche von dem Kanalschätzer benötigten Daten in dem betrachteten Multicode-Rake-Finger generiert werden. Folglich kann jedem Multicode-Rake-Finger ein Kanalschätzer fest zugeordnet werden. Ein weiterer Vorteil besteht darin, dass das demodulierte Pilotsignal als Phasenreferenz für die von den anderen Korrelatoren demodulierten Signale verwendet werden kann, d.h. dass jeder Multicode-Rake-Finger konstruktiv zur lokalen Generierung seiner eigenen Phasenreferenz ausgelegt ist.

Der erfindungsgemäße Rake-Demodulator kennzeichnet sich ferner dadurch, dass dieser einen ersten Multicode-Rake-Finger umfasst, dessen restliche Korrelatoren mit Spreizcodes variabler Spreizfaktoren betreibbar sind, und einen zweiten Multicode-Rake-Finger umfasst, welcher einen restlichen Korrelator umfasst, der mit Spreizcodes eines variablen Spreizfaktors betreibbar ist und dem von dem Mittel zum Zuordnen der zu demodulierenden Signale ein physikalischer Kontrollkanal mit variablem Spreizfaktor, insbesondere der im UMTS-Standard spezifizierte Kanal SCCPCH, zugeteilt werden kann. Der Nutzdatenempfang erfolgt allein im ersten Multicode-Rake-Finger und der Empfang von Kontrollinformation im zweiten Multicode-Rake-Finger. Es ergibt sich ein Vorteil dadurch, dass in einem Leerlauf-Modus (Idle-Modus), in welchem kein Nutzdatenempfang stattfindet aber ein Kontrollkanal mit variablem Spreizfaktor (in UMTS ist das der Kanal SCCPCH) ausgewertet werden muss, der erste Multicode-Rake-Finger vollständig abgeschaltet werden kann. Dies ist insbesondere im Hinblick auf Stromsparkonzepte günstig.

Da ein Großteil der Kontrollinformationen jedoch über physikalische Kanäle mit einem festen Spreizfaktor ausgestrahlt wird, insbesondere gilt dies für die Indikatorkanäle, über welche Akquisitionsinformationen und Paging-Informationen übertragen werden, besteht ein Vorteil darin, dass Auswerteeinrichtungen, die auf der Basis solcher Daten die entsprechenden Auswerteaufgaben lösen, fest mit einem zweiten Multicode-Rake-Finger verdrahtet sein können.

Eine bevorzugte Ausgestaltung der Erfindung kennzeichnet sich dadurch, dass in den Signalwegen hinter den restlichen Korrelatoren jeweils eine Gewichtungseinheit zum Multiplizieren der Signale mit geschätzten wegespezifischen Kanalgewichten angeordnet ist, und dass im Signalweg hinter dem Pilotsignal-Korrelator keine Gewichtungseinheit vorgesehen ist. Durch den Wegfall der für die Auswertung des oder der Pilotdaten nicht benötigten Gewichtungseinheit wird eine weitere Hardware-Einsparung im Vergleich zu herkömmlichen Rake-Fingern erzielt.

Vorzugsweise umfasst ein erster Multicode-Rake-Finger mindestens drei Korrelatoren zur Rekonstruktion von im Empfänger unbekannten Daten und einen Pilotsignal-Korrelator zur Rekonstruktion von Pilotdaten eines Pilotsignals. Ein solcher Multicode-Rake-Finger ermöglicht die gleichzeitige Demodulation von drei physikalischen Datenkanälen und einem Pilotkanal, welcher dann wie bereits erwähnt als Phasenreferenz für die drei physikalischen Datenkanäle dienen kann.

Ein zweiter Multicode-Rake-Finger umfasst vorzugsweise einen Korrelator zur Rekonstruktion von im Empfänger unbekannten Daten (Kontrollinformation) und den Pilotsignal-Korrelator zur Rekonstruktion von Pilotdaten eines Pilotensignals (mit festem Spreizfaktor). Das Pilotsignal kann als Phasenreferenz für das von dem anderen Korrelator demodulierte Signal verwendet werden.

Nach einer vorteilhaften Ausgestaltung der Erfindung sind jedem Multicode-Rake-Finger ferner eine Einheit zur Schätzung von wegespezifischen Kanalgewichten auf der Basis der rekonstruierten Pilotdaten zugeordnet. Für einen Multicode-Rake-Finger muss also nur ein Kanalschätzer vorgesehen sein, und die von den Korrelatoren eines Multicode-Rake-Fingers ausgegebenen Daten können alle mit ein und denselben wegespezifischen Kanalgewichten gewichtet werden.

Eine weitere vorteilhafte Ausgestaltung des erfindungsgemäßen Rake-Demodulators kennzeichnet sich dadurch, dass neben dem oder den ersten und dem oder den zweiten Multicode-Rake-Fingern ein Einzelcode-Rake-Finger mit einem einzigen Korrelator zur Rekonstruktion von Pilotdaten eines Pilotsignals ohne eine Einheit zur Gewichtung der von dem Korrelator ausgegebenen Daten vorhanden ist. Aufgrund des Fehlens der Gewichtungseinheit ist dieser Rake-Finger ausschließlich zur Erzeugung von Daten zu Meßzwecken ausgelegt, kann jedoch nicht wie die ersten und zweiten Multicode-Rake-Finger für Datenempfangsaufgaben bzw. für die Demodulation von Kontrollinformations-Kanälen herangezogen werden.

Wie bereits erwähnt, korrespondiert die aufgabenspezifische Auslegung der Multicode- und Einzelcode-Rake-Finger mit einer von dem zugrunde liegenden Mobilfunkstandard vorgegebenen Spezifizierung der physikalischen Kanäle. Insoweit kennzeichnet sich eine vorteilhafte Ausführungsvariante der Erfindung dadurch, dass der erste Multicode-Rake-Finger zur Rekonstruktion der Daten der im UMTS-Standard spezifizierten physikalischen Datenkanäle DPCH (Dedicated Physical Channel), PDSCH (Physical Downlink Shared Channel) sowie des Pilotkanals pCPICH (Primary Common Pilot Channel) und/oder des Pilotkanals sCPICH (Secondary Common Pilot Channel), vorgesehen ist. Der zweite Multicode-Rake-Finger ist vorzugsweise zur Rekonstruktion der Daten der im UMTS-Standard spezifizierten physikalischen Datenkanäle PCCPCH (Primary Common Control Physical Channel), AICH (Acquisition Indicator Channel) und PICH

(Paging Indicator Channel) sowie eines gemeinsamen Pilotkanals pCPICH und/oder sCPICH vorgesehen. Diese Kanäle weisen alle einen konstanten Spreizfaktor auf. Ferner kommt noch der Kontrollkanal SCCPCH mit variablem Spreizfaktor hinzu.

Im Unterschied zu einem herkömmlichen Rake-Demodulator ergibt sich bei dem erfindungsgemäßen Rake-Demodulator somit eine Zuordnung zwischen den verfügbaren physikalischen UMTS-Kanälen und den Rake-Finger-Typen (erster Multicode-Rake-Finger, zweite Multicode-Rake-Finger, Einzelcode-Rake-Finger).

Ein erfindungsgemäßer Rake-Empfänger umfasst neben einem erfindungsgemäßen Rake-Demodulator einen Prozessor, welcher durch Abarbeitung eines Datenverarbeitungsprogramms eine Programmierung der Korrelatoren der Multicode-Rake-Finger ermöglicht. Vorzugsweise ist das Datenverarbeitungsprogramm ausgelegt, einen ersten Multicode-Rake-Finger maximal einmal pro Zeitrahmen umzuprogrammieren. Über die Zeitdauer eines Zeitrahmens erfolgt die Demodulation in einem ersten Multicode-Rake-Finger also stets mit denselben Spreizcodes.

Im Gegensatz dazu kennzeichnet sich eine vorteilhafte Ausführungsvariante des erfindungsgemäßen Rake-Empfängers dadurch, dass das Datenverarbeitungsprogramm ausgelegt ist, einen zweiten Multicode-Rake-Finger mehrfach innerhalb eines Zeitrahmens zur Erzeugung von Daten für Meß- und/oder Überwachungszwecke umzuprogrammieren. Dadurch wird erreicht, dass innerhalb eines Zeitrahmens mehrere Meß- oder Überwachungsaufgaben nacheinander ausgeführt werden können.

Vorzugsweise wird diese Funktionalität in der Weise realisiert, dass der zweite Multicode-Rake-Finger eine vordefinierte und von dem Prozessor programmierte Aufgabenliste ohne Wechselwirkung mit dem Prozessor selbstständig abarbeiten kann und die Ergebnisse nach Beendigung der Abarbeitung der Aufgabenliste vom Prozessor abrufbar sind.

Die Erfindung wird nachfolgend anhand von Ausführungsbeispielen unter Bezugnahme auf die Zeichnung näher erläutert; in dieser zeigt:

Fig. 1 eine schematische Darstellung der Luftschnittstelle eines Mobilfunksystems;

Fig. 2 ein Blockschaltbild eines Rake-Empfängers gemäß dem Stand der Technik;

Fig. 3 eine schematische Darstellung des Aufbaus eines ersten Multicode-Rake-Fingers;

Fig. 4 eine schematische Darstellung des Aufbaus eines zweiten Multicodes-Rake-Fingers;

Fig. 5 eine schematische Darstellung des Aufbaus eines Einzelcode-Rake-Fingers; und

Fig. 6 ein Blockschaltbild zur Erläuterung der Architektur eines erfindungsgemäßen Rake-Empfängers.

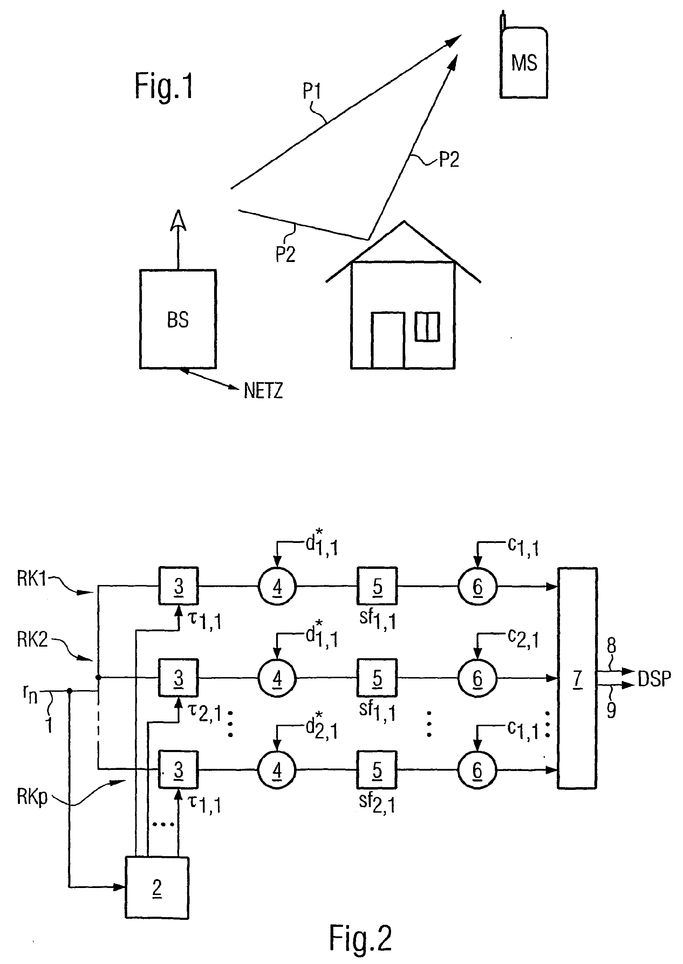

Fig. 1 zeigt in schematischer Darstellung die Luftschnittstelle eines zellularen Mobilfunksystems. Eine einem bestimmten Teilnehmer zugeordnete Mobilstation MS steht mit einer Basisstation BS in Funkverbindung. Die Funkverbindung unterliegt sowohl im Uplink (von MS zu BS) als auch im Downlink (von BS zu MS) der Mehrwegeausbreitung, d.h. ein von einem Sender gesendetes Funksignal kann den Empfänger auf unterschiedlichen Übertragungswegen P1, P2, ... der Luftschnittstelle (hier dargestellt für den Downlink) erreichen. Die Übertragungswege weisen ein unterschiedliches Übertragungsverhalten und insbesondere unterschiedliche Funksignal-Laufzeiten auf. Dies hat zur Folge, dass die über die Wege P1 und P2 übertragenen Empfangssignal-Versionen phasenverschoben, mit unterschiedlichen Energien und zeitlich versetzt an dem Mobilfunkempfänger MS eintreffen.

Im Folgenden werden CDMA-Systeme betrachtet. In einem Sender, beispielsweise BS, wird jeder auszusendende Datenstrom mit Index j, j = 0, ..., J, bestehend aus den Symbolen $a_{k,j}$ mit einer speziellen breitbandigen Chipsequenz bestehend aus den Chips $d_1$ spreizmoduliert. Die Anzahl der Chips $d_1$ mit 1 = 0, 1, ..., sf-1, wird als Spreizfaktor sf bezeichnet. Die Dauer $T_c$ eines Chips ergibt sich aus der Dauer T eines Symbols gemäß der Gleichung $T_c$ = T/sf. k ist der Symbolindex und entspricht einer diskreten Zeit. Das auszusendende spreizmodulierte Signal wird anschließend mit einem sendeseitigen Filter der Übertragungsfunktion f(t) gefiltert. t bezeichnet die kontinuierliche Zeit. Das dem Datenstrom mit Index j zugeordnete gesendete Signal $S_j(t)$ lautet:

$$s_j(t) = \sum_k a_{k,j} \sum_{l=0}^{sf-1} d_l f(t - kT - lT_C)$$

Das im Signalweg hinter dem Empfangsfilter vorliegende zeitdiskretisierte Empfangssignal $r_n$ mit Zeitindex n beruht auf einer Überlagerung der den ausgesendeten Datenströmen zugeordneten Sendesignalen $S_j(t)$ an der Empfangsantenne des Empfängers, beispielsweise MS, wobei zu beachten ist, dass Datenströme von verschiedenen Basisstationen empfangen werden können und außerdem zu jedem Datenstrom gemäß Fig. 1 mehrere Wegekomponenten zu erwarten sind. Werden insgesamt H Basisstationen betrachtet (h bezeichnet den Basisstations-Index, h = 0, ..., H-1) und sendet die Basisstation mit Index h eine Anzahl von $J_h$ Datenströme aus (j = 0, ..., $J_h$-1), so ergibt sich unter Berücksichtigung von $I_h$ Mehrwegkomponenten zwischen der Basisstation BS mit dem Index h und dem Empfänger MS, wobei i den Wegeindex bezeichnet (i = 0, ..., $I_h$-1), die folgende Gleichung für das zeitdiskretisierte Empfangssignal $r_n$:

$$r_n = \sum_{h=0}^{H-1} \sum_{i=0}^{I_h-1} c_{i,h,n} \sum_{j=0}^{J_h-1} \sum_{k} a_{k,j,h} \sum_{l=0}^{sf_{j,h}-1} d_{l,j,h} F\left(nT_s - \left(1 - l_{j,h} + k \cdot sf_{j,h}\right)T_c - \tau_{i,h,n}\right) + m(t)$$

Dabei bezeichnet F(t) die gemeinsame Impulsantwort des Sende-und Empfangsfilters und $c_{i,h,n}$ die komplexwertige Dämpfung des von der Basisstation mit Index h ausgesendeten und über den Ausbreitungsweg mit Index i erhaltenen Signals. Die Verzögerung dieses Signals (bezogen auf eine feste Zeitbasis) wird mit $\tau_{i,h,n}$ bezeichnet. m(t) ist ein additiver Rauschanteil. $l_{j,h}$ charakterisiert den zeitlichen Versatz $l_{j,h}T_c$, mit welchem die insgesamt $J_h$ Datenströme von der Basisstation mit Index h übertragen werden. Die verschiedenen Basisstationen können dabei die gleichen Daten $a_{k,j,h}$ senden. Dadurch wird ein Diversitätsgewinn erzielt. Die Chips der Chipsequenz, welche dem Datenstrom mit Index j von der Basisstation mit Index h zugeordnet sind, werden mit $d_{l,j,h}$ (dem Produkt aus Spreizcode und Scrambling-Code) bezeichnet. Die Abtastzeitdauer ist $T_s$.

Die von dem Empfänger auf der Basis des Empfangssignals $r_n$ durchzuführenden Aufgaben können in drei Gruppen eingeteilt werden:

1. Gruppe: Datenempfangs-Aufgaben
1.1 Rekonstruktion der ausschließlich für diesen Empfänger bestimmten (dedizierten) Daten $a_{k,j,h}$
1.2 Rekonstruktion der für alle Empfänger oder für eine Gruppe von Empfängern bestimmten Daten $a_{k,j,h}$; solche Daten werden auch als Broadcast- oder Multicast-Daten bezeichnet und können systemrelevante Informationen enthalten
2. Gruppe: Überwachungs- und Identifizierungsaufgaben
2.1 Extraktion von in den Datenstrom eingefügter Kontrollinformation
2.2 Identifizierung allgemeiner systemrelevanter Informationen, insbesondere von gesendeten Scrambling-Codes
3. Gruppe: Messaufgaben
3.1 Messung des Empfangspegels verschiedener Basisstationen
3.2 Messung des Rauschpegels
3.3 Messung der zeitlichen Differenz der Systemtakte verschiedener Basisstationen

Zur Rekonstruktion der gesendeten Daten $a_{k,j,h}$ (d.h. zur Lösung der Datenempfangs-Aufgaben der Gruppe 1) müssen die für den zu rekonstruierenden Datenstrom erforderlichen Parameter $d_{l,j,h}$ (d.h. der verwendete Spreizcode) , $sf_{j,h}$ (d.h. der Spreizfaktor) und $l_{j,h}$ (d.h. der zeitliche Versatz des betrachteten Datenstroms) bekannt sein (in der Praxis werden diese Parameter von der Basisstation der Mobilstation vorab mitgeteilt). Es sind dann die folgenden Schritte auszuführen:

- Schätzen der zeitlichen Verzögerungen $\tau_{i,h,n}$ der einzelnen Mehrwegekomponenten
- zeitgerechte Korrelation mit den durch die Chipsequenzen $d_{l,j,h}$ angegebenen Spreizcodes
- Eliminierung der Mehrwegeverzögerungen $\tau_{i,h,n}$ vor oder nach der Korrelation
- Schätzen der komplexwertigen Gewichte $c_{i,h,n}$
- Kombinieren der korrelierten Signale mit Hilfe der komplexwertigen Gewichte $c_{i,h,n}$.

Fig. 2 zeigt einen bekannten Rake-Empfänger und verdeutlicht, wie die genannten Schritte bisher durchgeführt wurden.

An einem Eingang 1 wird das zeitdiskretisierte Empfangssignal $r_n$ eingegeben. Das Empfangssignal $r_n$ wird sowohl einer Mehrzahl von Rake-Fingern RK1, RK2, ..., RKp identischen Aufbaus als auch einer Einheit 2 zur Schätzung der Mehrwegeverzögerung $\tau_{i,h,n}$ zugeführt. Jeder Rake-Finger RK1, RK2, ..., RKp besteht aus einer eingangsseitig angeordneten Verzögerungsstufe 3, einem Korrelator 4, einem Akkumulator 5 und einem Multiplizierer 6. Die Ausgänge der einzelnen Rake-Finger RK1, RK2, ..., RKp werden einem Kombinierer 7 zugeführt. Dieser ist ausgangsseitig mit einem DSP verbunden. In der Einheit 2 zur Schätzung der Mehrwegeverzögerung wird zunächst das Kanalprofil bestimmt (d.h. es werden die Energien der über die verschiedenen Ausbreitungswege übertragenen Signale ermittelt) und anhand des Kanalprofils werden die Verzögerungen der energiereichsten Ausbreitungswege bestimmt. Beispielsweise werden für eine über den Ausbreitungsweg i = 1 von der Basisstation h = 1 übertragene Signalkomponente die Verzögerung $\tau_{1,1}$ ermittelt und der Verzögerungsstufe 3 des ersten Rake-Finger RK1 zugeführt, für einen zweiten Ausbreitungsweg i = 2 wird die Verzögerung $\tau_{2,1}$ ermittelt und der Verzögerungsstufe 3 des zweiten Rake-Fingers RK2 zugeführt, ... und der Verzögerungsstufe des p-ten Rake-Fingers RKp wird die Verzögerung $\tau_{1,1}$ zugeführt (der Symbolindex n ist bei dieser und bei den folgenden Notationen fortgelassen).

Den Korrelatoren 4 der ersten beiden Rake-Finger RK1 und RK2 wird ein teilnehmerspezifischer Spreizcode $d_{1,1}^{*}$ zur Entspreizung des Datenstroms j = 1 von der Basisstation h = 1 mit dem Spreizfaktor $sf_{1,1}$ zugeführt. Der Korrelator 4 des Rake-Fingers RKp entspreizt einen anderen Datenstrom j = 2 mit dem Spreizcode $d_{2,1}^{*}$, dessen Spreizfaktor $sf_{2,1}$ beträgt. Der hochgestellte Index * steht für die komplexe Konjugation.

Durch die Verwendung unterschiedlicher Spreizcodes in den Rake-Fingern RK1 und RKp werden die über den gleichen Weg i = 1 übertragenen Datenströme Code-spezifisch separiert.

Die gegebenenfalls unterschiedlichen Spreizfaktoren $sf_{1,1}$ und $sf_{2,1}$ werden den zugehörigen Akkumulatoren 5 in den Rake-Fingern RK1, RK2, RKp mitgeteilt. Die Akkumulatoren 5 nehmen gemäß dem jeweiligen Spreizfaktor eine Akkumulation der Chips über eine Symbolzeitdauer T vor. Die hinter den Akkumulatoren im (jeweiligen) Symboltakt vorliegenden Daten werden in den Multiplizierern 6 mit den in einem Kanalschätzer (nicht dargestellt) ermittelten komplexwertigen Gewichten multipliziert. Diese sind für die Rake-Finger RK1 und RKp identisch, da derselbe Ausbreitungsweg i = 1 (ausgehend von derselben Basisstation h = 1) betrachtet wird, und lauten $c_{1,1}$. Der einem anderen Ausbreitungsweg i = 2 zugeordnete Rake-Finger RK2 wird mit anderen komplexwertigen Gewichten $c_{2,1}$ versorgt.

Der Kombinierer 7 kombiniert die zu denselben Datenströmen gehörenden Wegekomponenten. In dem hier gezeigten Beispiel werden die zu dem Datenstrom j = 1 gehörenden Ausgänge der Rake-Finger RK1 und RK2 kombiniert und über einen Ausgang 8 ausgegeben, während der Ausgang des zu dem Datenstrom j = 2 gehörenden Rake-Fingers RKp unkombiniert an einem Ausgang 9 des Rake-Empfängers bereitgestellt wird.

Ferner wird der Rake-Empfänger für die Identifizierung systemrelevanter Informationen (Aufgabe der Gruppe 2) eingesetzt, indem die Korrelatoren 4 solange mit unterschiedlichen Scrambling-Codes (in der obigen Darstellung bezeichnet $d_{I,j,h}$ das Produkt aus Spreizcodes und Scrambling-Codes) betrieben werden, bis eine Korrelation festgestellt und damit der gesuchte Scrambling-Code gefunden ist.

Zur Durchführung der Pegelmessungen (Aufgaben der Gruppe 3) wird ebenfalls der in Fig. 2 dargestellte Rake-Empfänger genutzt. In der Regel erfolgt die Berechnung der Messwerte in dem DSP durch eine entsprechende Weiterverarbeitung (im Wesentlichen: Aufakkumulation über mehrere Symbole oder Slots und Quadratbildung) der Signale 8, 9.

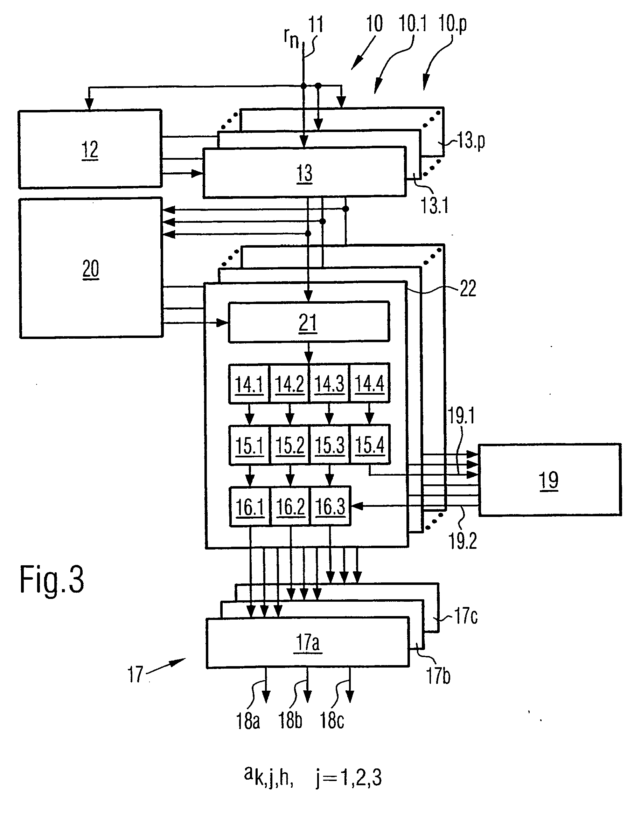

In den Figuren 3 bis 5 sind verschiedene Typen von Rake-Fingern dargestellt, die erfindungsgemäß speziell auf die verschiedenen obengenannten Aufgaben zugeschnitten sind.

In Fig. 3 ist ein 4-kanaliger Multicode-Rake-Finger 10 sowie zwei perspektivisch dahinterliegend dargestellte Multicode-Rake-Finger 10.1 und 10.p identischen Aufbaus dargestellt. Der 4-kanalige Multicode-Rake-Finger wird im folgenden als MC4-Rake-Finger 10, 10.1, 10.p bezeichnet. Er weist eingangsseitig eine Verzögerungsstufe 13 auf. Im weiteren Signalweg ist ein Interpolator 21 vorgesehen. Das Ausgangssignal des Interpolators 21 wird vier parallel angeordneten Korrelatoren 14.1, 14.2, 14.3, 14.4 zugeleitet. Den Korrelatoren 14.1, ..., 14.4 sind vier parallel liegende Akkumulatoren 15.1, 15.2, 15.3, 15.4 nachgeordnet, von denen jeder ein Ausgangssignal eines der Korrelatoren 14.1, ..., 14.4 empfängt. Die Ausgangssignale der Akkumulatoren 15.1, 15.2, 15.3 werden drei parallel angeordneten Gewichtungseinheiten (Multiplizierern) 16.1, 16.2, 16.3 zugeleitet. Die Ausgänge der drei Gewichtungseinheiten 16.1, 16.2, 16.3 stellen die Ausgänge des MC4-Rake-Fingers 10 dar.

Dem MC4-Rake-Finger 10 ist ein Kombinierer 17 nachgeschaltet, der drei Addierer 17a, 17b und 17c umfasst. Der Ausgang des Addierers 17a ist mit dem Bezugszeichen 18a, der Ausgang des Addierers 17b ist mit dem Bezugszeichen 18b und der Ausgang des Addierers 17c ist mit dem Bezugszeichen 18c bezeichnet.

Dem MC4-Rake-Finger 10 ist eine Einheit 19 zum Schätzen der komplexwertigen Kanalgewichte $c_{i,h,n}$ zugeordnet. Die Einheit 19 steht über eine Verbindung 19.1 mit dem Ausgang des Akkumulators 15.4 in Verbindung und liefert über die Verbindung 19.2 die komplexwertigen Kanalgewichte für die drei Gewichtungseinheiten 16.1, 16.2 und 16.3.

Die weiteren in Fig. 3 erkennbaren MC4-Rake-Finger 10.1 und 10.p weisen ebenfalls jeweils eine Verzögerungsstufe 13.1, 13.p und bezüglich der in dem Rahmen 22 dargestellten Baugruppen 21, 14.1-4, 15.1-4, 16.1-3 einen identischen Aufbau auf.

Die Mehrwegeverzögerungen werden in dem Rake-Finger 10 zweistufig geschätzt und ausgeglichen. Zunächst erfolgt mittels der Einheit 12 eine Schätzung der Mehrwegeverzögerung im Abtastzeitraster, d.h. mit einer durch die Abtastrate $T_s^{-1}$ begrenzten Genauigkeit. Die daraufhin erfolgende Grob-Verzögerungseinstellung wird von der Verzögerungsstufe 13 vorgenommen. Eine genauere Auflösung der Mehrwegeverzögerung wird anschließend mit der Einheit 20 zur Berechnung eines Interpolationsparameters (d.h. eines Abtastzeitfehlers) erreicht. Der Interpolator 21 wird mit dem berechneten Interpolationsparameter angesteuert und erzeugt interpolierte Datenwerte an der von dem Interpolationsparameter bestimmten Stützstelle. Bei der Einheit 20 zur Berechnung eines Interpolationsparameters kann es sich beispielsweise um einen Early/Late-Korrelator handeln.

Die beiden Stufen 12, 13 und 20, 21 können in einer einzigen Einheit zusammengefasst werden. Ebenso ist es möglich, die Mehrwegeverzögerung erst im Laufe der weiteren Signalverarbeitung auszugleichen.

Es wird darauf hingewiesen, dass eine einzige Verzögerungskompensionseinheit 12, 13, 20, 21 ausreicht, um sämtliche Einheiten des 4-kanaligen MC4-Rake-Fingers 10 (bzw. 10.1, 10.p) zeitrichtig zu justieren.

Die Korrelatoren 14.1, 14.2, 14.3, Akkumulatoren 15.1, 15.2, 15.3 und Gewichtungseinheiten 16.1, 16.2, 16.3 dienen zur Rekonstruktion der Daten $a_{k,j,h}$ für verschiedene Datenströme j (hier drei Stück), wobei der Spreizfaktor dieser Datenströme variabel und untereinander unterschiedlich sein kann. Die Anzahl der Gewichtungseinheiten 16.1-3 bzw. der zugeordneten Akkumulatoren 15.1-3 und Korrelatoren 14.1-3 kann daher gleich der maximal möglichen Anzahl paralleler Datenströme mit variablen Spreizfaktoren gewählt werden. Neben den drei für den Datenempfang vorgesehenen Code-Einheiten 14.1, 15.1, 16.1; 14.2, 15.2, 16.2; 14.3, 15.3, 16.3 ist eine weitere Code-Einheit 14.4, 15.4 zur Kanalschätzung unter Zuhilfenahme eines Pilotsignals ausgelegt.

Ein derartiger MC4-Rake-Finger erlaubt die Lösung sämtlicher Datenverarbeitungsaufgaben, die den rekonstruierten Datenströmen mit variablen Spreizfaktoren gemeinsam ist, d.h. insbesondere die Lösung der Aufgaben 1.1 und 1.2 der Gruppe 1.

Wird angenommen, dass nur die Basisstation h = 1 zu dem zeitdiskreten Empfangssignal $r_n$ beiträgt, werden an dem Ausgang 18a des Addierers 17a die Daten $a_{k,1,1}$ des Datenstroms j = 1 ausgegeben, an dem Ausgang 18b des zweiten Addierers 17b werden die Daten $a_{k,2,1}$ des Datenstroms j = 2 ausgeben und an dem Ausgang 18c des dritten Addierers 17c werden die Daten $a_{k,3,1}$ des dritten Datenstroms j = 3 bereitgestellt. p Ausbreitungswege können maximal berücksichtigt werden.

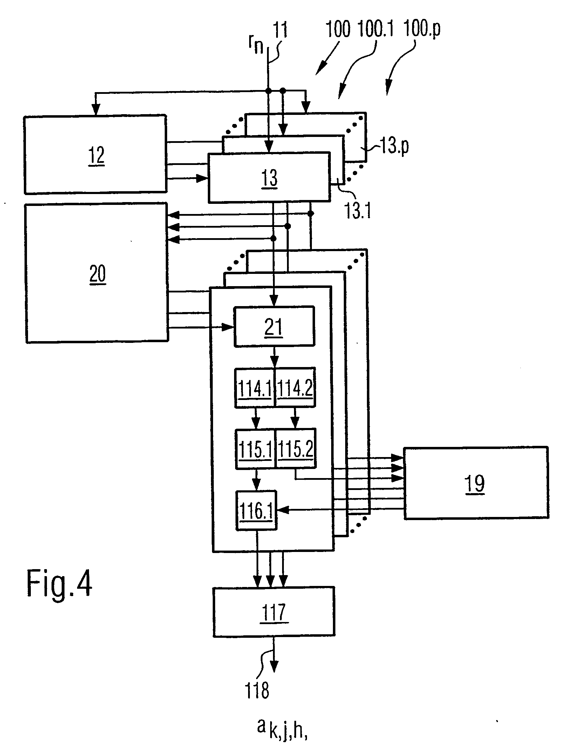

Der in Fig. 4 dargestellte 2-kanalige Multicode-Rake-Finger 100 wird im Folgenden als MC2-Rake-Finger bezeichnet. Die Einheiten 12, 13, 13.1, 13.p, 19, 20 und 21 entsprechen den in Fig. 3 dargestellten Einheiten mit denselben Bezugszeichen. Im Unterschied zu dem MC4-Rake-Finger 10 sind in dem MC2-Rake-Finger 100 lediglich zwei Korrelatoren 114.1, 114.2, zwei Akkumulatoren 115.1, 115.2 sowie eine Gewichtungseinheit 116.1 vorhanden. Der Kombinierer 117 ist ebenfalls einstufig ausgeführt.

Der MC2-Rake-Finger 100 (bzw. die perspektivisch dahinterliegend eingezeichneten baugleichen MC2-Rake-Finger 100.1 und 100.p) ist zur Rekonstruktion allgemeiner Systeminformationen, insbesondere der Rekonstruktion von Daten aus speziellen Indikator-Kanälen, und zu Messzwecken, d.h. zur Bewältigung der in den Gruppen 2 und 3 angegebenen Aufgaben, vorgesehen. Gemeinsam ist den für diese Zwecke benötigten Datenströmen ein systemweit fest vorgegebener Spreizfaktor sf, der im UMTS-Standard sf = 256 beträgt. Im Vergleich zu einem MC4-Rake-Finger 10 können daher der Korrelator 114.1 wie auch der Akkumulator 115.1 konstruktiv einfacher als die Korrelatoren 14.1-3 bzw. die Akkumulatoren 15.1-3 ausgeführt sein. Beispielsweise muss der Akkumulator 115.1 nicht steuerbar sein, da stets über die gleiche Anzahl sf von Chips akkumuliert wird. Sind Kontrollkanäle mit variablem Spreizfaktor vorhanden, müssen der Korrelator 114.1 und der Akkumulator 115.1 für den Betrieb mit einem variablen Spreizfaktor geeignet sein. Nunmehr kann der MC2-Rake-Finger auch zur Demodulation des SCCPCH (insbesondere im Idle-Mode) eingesetzt werden.

Am Ausgang 118 des Kombinierers 117 werden die Daten $a_{k,j,h}$ des von der ersten Code-Einheit 114.1, 115.1, 116.1 ausgewählten und verarbeiteten Datenstroms j ausgegeben. Die zweite Code-Einheit 114.2 und 115.2 dient wie beim MC4-Rake-Finger 10 Messaufgaben auf der Basis eines Pilotsignals, insbesondere der Kanalschätzung.

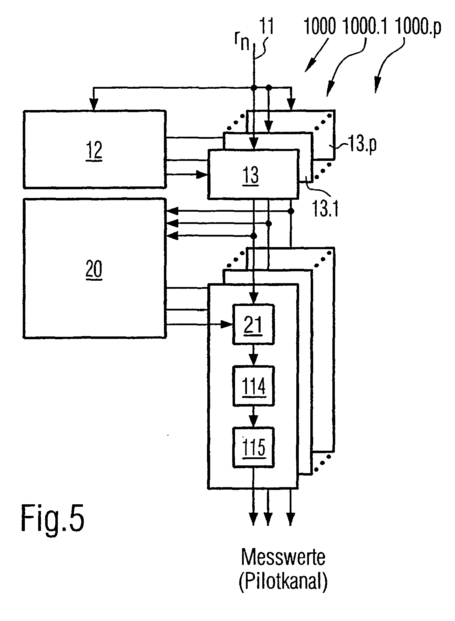

Fig. 5 zeigt einen EC-Rake-Finger 1000 (EC steht für Einfach-Code). Der EC-Rake-Finger 1000 dient für Messzwecke beruhend auf Pilotsignalen und/oder für die Identifikation von benutzten Teilnehmer- und/oder Basisstations-spezifischen Scrambling-Codes ($d_{l,j,h}$ bezeichnet das Produkt aus Spreizcodes und Scrambling-Codes), d.h. für die Aufgabe 2.2 und für Aufgaben der Gruppen 3.

Der EC-Rake-Finger 1000 (bzw. die perspektivisch dahinterliegend eingezeichneten EC-Rake-Finger 1000.1, 1000.p) umfasst neben den bereits erläuterten Einheiten 12, 13, 20, 21 einen Korrelator 114 und einen Akkumulator 115. Der Korrelator 114 ist baugleich mit dem in Fig. 4 dargestellten Korrelator 114.1 und kann lediglich mit Spreizcodes eines festen Spreizfaktors sf betrieben werden.

Folglich ist auch der Akkumulator 115 des EC-Rake-Fingers 1000 identisch mit dem Akkumulator 115.1 des MC2-Rake-Fingers 100.

Der EC-Rake-Finger 1000 kann wie bereits erwähnt allgemeine Messungen auf Pilotkanälen unterstützen, ist jedoch nicht zum Empfang von Daten $a_{k,j,h}$ geeignet. Er ist nochmals gegenüber dem MC2-Rake-Finger 100 vereinfacht, da er weder eine Gewichtungseinheit 116.1 noch einen Kombinierer 117 zur Kombination verschiedener Mehrwegekomponenten aufweist.

Zusammenfassend lässt sich feststellen, dass der MC4-Rake-Finger 10 für den allgemeinen Datenumfang, der MC2-Rake-Finger 100 für den Empfang von Steuer- bzw. Kontrollinformation mit festem Spreizfaktor oder variablem Spreizfaktor und der EC-Rake-Finger 1000 zu Messzwecken und zur Identifizierung systemrelevanter Information auf der Basis von Pilotkanälen ausgelegt sind.

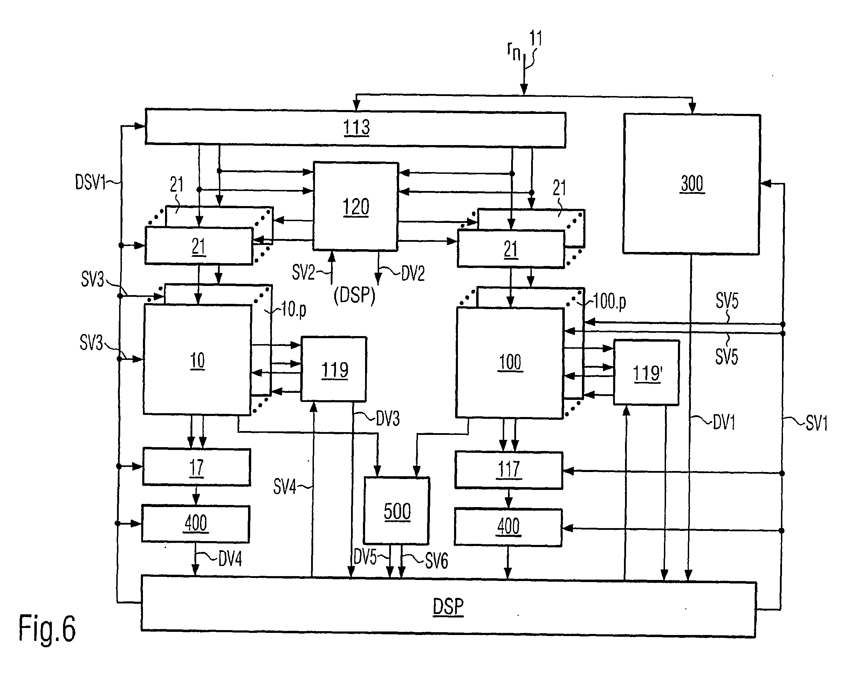

Fig. 6 zeigt die Architektur eines erfindungsgemäßen Rake-Empfängers. Die Architektur umfasst mehrere MC4-Rake-Finger 10, 10.p, mehrere MC2-Rake-Finger 100, 100.p, einen den MC4-Rake-Fingern 10, 10.p nachgeschalteten Kombinierer 17, einen den MC2-Rake-Fingern 100, 100.p nachgeschalteten Kombinierer 117, eine Mehrwege-Verzögerungsstufe 113, Interpolatoren 21, eine Mehrwege-Einheit 120 zur Berechnung von

Interpolationsparametern sowie zwei Pilotbit-Verarbeitungseinheiten 119, 119'. Ferner umfasst die Architektur einen DSP, einen Kanalprofilschätzer 300, zwei QPSK-(Quadrature Phase Shift Keying-)Demodulatoren 400 sowie eine Messwert-Vorverarbeitungseinheit 500.

Sämtliche in Fig. 6 dargestellte Einheiten mit Ausnahme des DSP sind als dedizierte Hardware-Einheiten, d.h. als fest verdrahtete Hardware-Schaltungen, ausgeführt. Die Systemarchitektur nützt dabei die in 3GPP TS 25.211 V4.2.0 (2001-09) niedergelegten Vorgaben der UMTS-Spezifikation aus, welche die verfügbaren physikalischen Kanäle definiert und damit nur bestimmte Kanal- und Datensignalkonstellationen zulässt. Diese Einschränkungen ausnützend zielt die in Fig. 6 dargestellte Architektur darauf ab, möglichst viele der in dem Empfänger zu bewältigenden Aufgaben in Hardware zu verlagern, wodurch der DSP entlastet und der Datenverkehr zwischen Hardware und Software (DSP) reduziert wird.

In der vorstehend genannten UMTS-Spezifikation sind für die Datenübertragung im Downlink mit variablem Spreizfaktor (sf = 4 bis 256) der dedizierte physikalische Kanal DPCH (5.3.2) und die gemeinsamen physikalischen Kanäle PDSCH (5.3.3.6) und SCCPCH (5.3.3.4) vorgegeben. Der gemeinsame Pilotkanal CPICH (5.3.3) setzt sich aus einem ersten Pilotkanal pCPICH (5.3.3.1.1) und einem zweiten Pilotkanal sCPICH (5.3.3.1.2) zusammen. Für beide Pilotkanäle gilt sf = 256. Beide Pilotkanäle sind ferner mit einem Basisstations-spezifischen Scrambling-Code codiert und können als Phasenreferenz für den DPCH eingesetzt werden.

Der gemeinsame physikalische Kanal PCCPCH (5.3.3.3) ist ein Broadcast-Kanal für system- und zellenspezifische Information mit sf = 256. Den gleichen festen Spreizfaktor weisen die Indikatorkanäle AICH (5.3.3.7) und PICH (5.3.3.10) auf, welche ebenfalls gemeinsame Kanäle sind und Akquisitionsinformationen bzw. Paging-Informationen tragen. Die in Klammern hinter die Kanalbezeichnung gesetzte Zahlenangabe stellt die Kapitelnummer der oben bezeichneten UMTS-Spezifikation dar, in welcher der jeweilige physikalische Kanal näher beschrieben ist. Diese Kapitel werden durch Bezugnahme dem Inhalt der vorliegenden Schrift hinzugefügt.

Das zeitdiskrete Empfangssignal $r_n$ wird über den Eingang 11 sowohl der Mehrwege-Verzögerungsstufe 113 als auch dem Kanalprofilschätzer 300 zugeführt. Der Kanalprofilschätzer 300 bestimmt auf der Basis des CPICH und/ oder der dedizierten Pilotsymbole im DPCH durch Korrelation mit dem im Empfänger bekannten gesendeten Pilotsignal den Betragsgang der Impulsantwort des Übertragungskanals, d.h. das sogenannte Kanalprofil, auch bezeichnet als PDP (Power Delay Profile). Um den Einfluss von schnellem Fading auf die Schätzung zu minimieren, muss der Kanalprofilschätzer 300 in der Lage sein, mehrere Einzelschätzungen zu verschiedenen Zeitpunkten kohärent oder inkohärent zu mitteln. Da das Kanalprofil für eine Reihe von Basisstationen bestimmt werden muss, die asynchron zueinander sind, ist diese Einheit 300 in der Lage, auf Basis einer Aufgabenliste innerhalb eines definierten Zeitraumes (z.B. innerhalb eines Zeitrahmens der Zeitdauer 10 ms) eine Reihe von Schätzungen für verschiedene Basisstationen autonom abzuarbeiten, ohne dass der DSP innerhalb dieses Zeitraumes über die Steuerdatenverbindung SV1 eingreifen muss. Die Ergebnisse der Kanalprofilmessung (Rohdaten für die Kanalenergien und Verzögerungszeiten $\tau_{i,h,n}$) werden dem DSP über die Datenverbindung DV1 mitgeteilt.

Der DSP bestimmt durch Auswertung der von dem Kanalprofilschätzer 300 erhaltenen Daten die Wege-Verzögerungen $\tau_{i,h,n}$ und übermittelt diese über die Daten- und Steuerdatenverbindung DSV1 an die Mehrwege-Verzögerungsstufe 113. Die Mehrwege-Verzögerungsstufe 113 setzt sich aus einzelnen Verzögerungsstufen 13 zusammen und bewirkt in Verbindung mit der Mehrwege-Einheit 120 zur Berechnung von Interpolationsparametern, dass die im Signalweg nachgeordneten Rake-Finger 10, 10.p und 100, 100.p zeitlich synchronisiert (im Sinne der Kompensation der Mehrwegeverzögerung) betrieben werden. Die Einheit 120 umfasst zu diesem Zweck mehrere der bereits beschriebenen Einheiten 20 in Parallelschaltung.

Die Einheit 120 wird über eine Steuerdatenverbindung SV2 von dem DSP gesteuert und stellt über eine Datenverbindung DV2 dem DSP die berechneten Interpolationsparameter bzw. Abtastzeitfehler zu Kontrollzwecken zur Verfügung. Über die Steuerdatenverbindung SV2 kann der DSP die Einheit 120 in verschiedenen Betriebsmodi (z.B. variabler Fangbereich, variable Empfindlichkeit) betreiben.

Die MC4-Rake-Finger 10, 10.p führen die Demodulation der Nutzdatenkanäle DPCH, PDSCH, SCCPCH durch. Wie bereits erläutert, ist diese Einheit 10, 10.p speziell an die Verarbeitung dieser Kanäle mit variablen Spreizfaktoren angepasst. Im Fall von Multicode-Übertragung (DPCH, PDSCH, SCCPCH) wird dabei ausgenutzt, dass alle parallelen Codes über den gleichen Mehrwegekanal übertragen werden, und deshalb parallel in einem MC4-Rake-Finger 10, 10.p verarbeitet werden können (d.h. es existieren ein gleicher Abtastwert und gleiche Kanalgewichte für alle Codes). Wie bereits erwähnt, ermöglicht der MC4-Rake-Finger 10, 10.p ebenfalls die Verarbeitung eines Pilotkanals (pCPICH oder sCPICH), welcher dann ebenfalls parallel zu den genannten Datenkanälen entspreizt wird und als Phasenreferenz dient.

Die Programmierung des MC4-Rake-Fingers 10, 10.p wird von dem DSP vorgenommen und erfolgt über die Steuerdatenverbindung SV3. Im Rahmen der Programmierung werden die benötigten Spreizcodes $d_{l,j,h}$ sowie die entsprechenden Spreizfaktoren $sf_{j,h}$ dem MC4-Rake-Finger 10, 10.p mitgeteilt. Dieser ist in nicht dargestellter Weise mit einem Spreizcode-Generator verbunden, welcher den gewünschten Spreizcode erzeugt. Die Programmierung des MC4-Rake-Fingers 10, 10.p erfolgt vorzugsweise auf der Basis von Zeitrahmen, d.h. maximal jede 10 ms. Falls innerhalb des betrachteten Zeitrahmens z.B. der Kanal PDSCH und/oder SCCPCH aktiviert werden müssen, kann der DSP eine weitere Programmierung (zusätzlich zu der Programmierung am Rahmenbeginn) vornehmen.

Die Pilotbit-Verarbeitungseinheit 119 ist über eine Steuerdatenverbindung SV4 mit dem DSP verbunden. Sie kann 4 verschiedene Funktionen ausführen, welche über die Steuerdatenverbindung SV4 angewählt werden:

Funktion 1 : Die Pilotbit-Verarbeitungseinheit 119 berechnet die komplexwertigen Kanalgewichte $c_{i,h,n}$ und arbeitet somit wie die bereits beschriebene Einheit 19.

Funktion 2: Die Pilotbit-Verarbeitungseinheit 119 berechnet die Signalleistung und die Störleistung auf den einzelnen Ausbreitungswegen und übermittelt diese Daten über die Datenverbindung DV3 an den DSP. Die Weiterverarbeitung dieser Daten erfolgt im DSP im Rahmen des Leistungsregelungs-Algorithmus.

Funktion 3: Die Pilotbit-Verarbeitungseinheit 119 berechnet ein vorverarbeitetes Signal zur Bestimmung der Antennen-Gewichte für senderseitige Antennendiversität im geschlossenen Regelkreis (Closed Loop Transmit Diversity). Die Weiterverarbeitung dieser Daten zur Erzeugung des Rückmeldesignals für die Basisstation erfolgt wiederum in dem DSP.

Funktion 4: Die Pilotbit-Verarbeitungseinheit 119 berechnet ein Differenzsignal aus aktuellen und zeitlich zurückliegenden Pilotbits für die Frequenzregelung. Wiederum erfolgt die Weiterverarbeitung dieses Differenzsignals im DSP.

Der DSP hat ferner die Möglichkeit, über die Steuerdatenverbindung SV4 verschiedene Betriebsmodi für die Berechnung der einzelnen Funktionen zu wählen. Funktion 1 läuft dann gemäß dem gewählten Betriebsmodus vollkommen autonom in der Pilotbit-Verarbeitungseinheit 119 ab. Zu Kontrollzwecken können die berechneten Kanalgewichte $c_{i,h,n}$ dem DSP über die Datenverbindung DV3 zur Verfügung gestellt werden. Die Funktionen 2 bis 4 erzeugen auf der Basis von Pilotbits und Rauschmessungen Zwischenergebnisse, die dann im DSP weiter verarbeitet werden. Ziel der Erzeugung von Zwischenergebniswerten in der Pilotbit-Verarbeitungseinheit 119 ist es, den Rechnungsaufwand für den DSP zu reduzieren. Darüber hinaus wird der Datenverkehr über die Software-Hardware-Schnittstelle reduziert, da die Zwischenergebniswerte verdichtete Rohdatenwerte darstellen.

Nach der Kombination der Wegekomponenten der einzelnen Datenströme in dem Kombinierer 17 werden die Daten (es handelt sich um zweidimensionale bzw. komplexwertige QPSK-Symbole) dem QPSK-Demodulator 400 zugeführt. Der QPSK-Demodulator 400 wandelt die QPSK-Symbole in einen eindimensionalen seriellen Strom aus Softbitwerten um. Der Strom von Softbitwerten wird über die Datenverbindung DV4 dem DSP zugeleitet und von diesem geeignet weiter verarbeitet.

Die Aufgabe der Messwert-Vorverarbeitungseinheit 500 besteht in der Vorverarbeitung der von den Rake-Fingern entspreizten Symbolen des gemeinsamen Pilotkanals CPICH zur Berechnung der geforderten Messwerte. Typische Aufgaben sind das Bilden des Betragsquadrats, das kohärente oder inkohärente Aufaddieren mehrerer Symbole, sowie das Zwischenspeichern von berechneten Zwischenergebnissen. Die Zwischenergebnisse werden dem DSP über die Datenverbindung DV5 mitgeteilt und von diesem zu den geforderten Messwerten weiterverarbeitet. Der DSP konfiguriert die genaue Aufgabe der Messwert-Vorverarbeitungseinheit 500 über die Steuerdatenverbindung SV6 entsprechend dem jeweiligen Szenario.

Die MC2-Rake-Finger 100, 100.p führen die Demodulation von gemeinsamen Datenkanälen (PCCPCH), von Indikatorkanälen (AICH, PICH) sowie von gemeinsamen Pilotkanälen (pCPICH und/oder sCPICH) durch. Der MC2-Rake-Finger 100 ist speziell an die Verarbeitung dieser Kanäle angepasst. So wird bei der Entspreizung von PCCPCH und AICH oder PICH die zugehörige Phasenreferenz pCPICH parallel zu den Datenkanälen entspreizt und die Pilotsymbole an die Pilotbit-Verarbeitungseinheit 119' weitergegeben. Der MC2-Rake-Finger ist auch zur Demodulation des SCCPCH (auch im Idle-Mode) ausgelegt.

Die Pilotbit-Verarbeitungseinheit 119' unterscheidet sich von der Pilotbit-Verarbeitungseinheit 119 dadurch, dass sie nicht zur Verarbeitung von dedizierten Pilotbits ausgelegt sein muss, da diese lediglich in dem physikalischen Kanal DPCH gesendet werden, welcher von dem MC2-Rake-Finger 100, 100.p nicht verarbeitet wird. Im Bezug auf ihre Funktionalität und Programmierbarkeit ist die Pilotbit-Verarbeitungseinheit 119' vergleichbar mit der Pilotbit-Verarbeitungseinheit 119.

Die Signalverarbeitung in dem MC2-Rake-Finger 100, 100.p wurde bereits im Zusammenhang mit der Fig. 4 beschrieben und unterscheidet sich von der Signalverarbeitung in dem MC4-Rake-Finger 10, 10.p im Wesentlichen durch die Verwendung von Spreizcodes mit festem Spreizfaktor sf = 256 für die genannten Kontrollinformationskanäle mit festem Spreizfaktor und die Einführung eines variablen Spreizfaktors zur zusätzlichen Demodulation des SCCPCH. Die Programmierung der MC2-Rake-Finger 100, 100.p erfolgt über die Steuerdatenverbindungen SV5 mittels des DSP. Die Verbindung zu geeigneten Spreizcode-Generatoren, welche nur die für die genannten physikalischen Kanäle benötigten Spreizcodes erzeugen können müssen, ist in Fig. 6 nicht dargestellt.

Die MC2-Rake-Finger 100, 100.p werden ebenfalls auf Zeitrahmenbasis (10 ms) vom DSP programmiert. Im Unterschied zu den MC4-Rake-Fingern 10, 10.p bleibt diese Programmierung jedoch nicht über eine Rahmenzeitdauer gültig, sondern es wird gemäß einer Aufgabenliste, nach welcher innerhalb einer Rahmenzeitdauer eine Reihe von unterschiedlichen Aufgaben abgearbeitet werden sollen, zu definierten Zeitpunkten eine Umprogrammierung der MC2-Rake-Finger 100, 100.p vorgenommen werden.

Der Grund für die Umprogrammierung der MC2-Rake-Finger 10, 10.p innerhalb einer Rahmenzeitdauer z.B. mittels eines Mikroprogramms besteht darin, dass einige der von den MC2-Rake-Fingern 10, 10.p ausgeführten Aufgaben (Signal- und Rauschmessungen, Scrambling-Code-Identifikation) nicht über eine gesamte Rahmenzeitdauer ausgeführt werden müssen. Diese Aufgaben erstrecken sich nur über wenige Symbole (jeweils bestehend aus 256 Chips) oder allenfalls über einen, zwei oder drei Zeitschlitze. Um die MC2-Rake-Finger 100, 100.p für den Rest des Rahmens nicht ungenutzt zu lassen, werden durch die Umprogrammierung, welche im Symbolzeitraster (66 μs) oder im Zeitschlitzraster (666 μs) erfolgen kann, die in der Aufgabenliste angegebenen Aufgaben sequenziell abgearbeitet.

Z.B. kann die Aufgabenliste vorsehen, dass zunächst für die ersten drei Zeitschlitze eines Rahmens eine Leistungsmessung in der Monitorzelle x durchgeführt wird. In den darauffolgenden drei Zeitschlitzen wird eine Leistungsmessung in der Monitorzelle y durchgeführt. Im anschließenden Zeitschlitz (Zeitschlitz 7) erfolgt die Identifikation des Scrambling-Codes einer neu detektierten Zelle auf der Basis von acht möglichen Scrambling-Codes. Anschließend wird eine Messung des Rauschpegels auf unbenutzten Codes über eine weitere Anzahl von Zeitschlitzen durchgeführt, und so weiter.

Es wird darauf hingewiesen, dass der erfindungsgemäße Rake-Empfänger nicht notwendigerweise sowohl MC4-Rake-Finger 10, 10.p als auch MC2-Rake-Finger 100, 100.p umfassen muss. Da die MC2-Rake-Finger 100, 100.p und die Pilotverarbeitungseinheit 119' von ihren Funktionsumfängen her nur eine Untermenge von den MC4-Rake-Fingern 10, 10.p bzw. der Pilotbit-Verarbeitungseinheit 119 darstellen, ist es möglich, diese beiden Einheiten zusammenzufassen. In diesem Fall enthält der erfindungsgemäße Rake-Empfänger ausschließlich MC4-Rake-Finger 10, 10.p, die die Funktion der MC2-Rake-Finger 100, 100.p übernehmen.

Des Weiteren ist es möglich, den in Fig. 5 dargestellten EC-Rake-Finger 1000, 1000.p in die in Fig. 6 gezeigte Architektur aufzunehmen. In diesem Fall übernimmt der EC-Rake-Finger 1000, 1000.p die Aufgaben der Entspreizung des CPICH für Messzwecke und der Unterstützung der MC2-Rake-Finger 100, 100.p bei der Zellsuche, so dass der MC2-Rake-Finger 100, 100.p in diesem Fall auf die Entspreizung der Indikatorkanäle (AICH/PICH) sowie des PCCPCH spezialisiert ist.

**Patentansprüche**

1. Rake-Demodulator zur Demodulation von der Mehrwege-Ausbreitung unterliegenden spreizcodierten Signalen mehrerer physikalischer Kanäle, welcher eine Mehrzahl von parallel zueinander angeordneten Rake-Fingern aufweist, wobei im Betrieb ein Rake-Finger einem einzelnen Ausbreitungsweg zugeordnet ist, worin
der Rake-Demodulator wenigstens einen oder mehrere erste und einen oder mehrere zweite Multicode-Rake-Finger (10; 100) und Mittel, welche eine Zuordnung zwischen den Signalen der verschiedenen physikalischen Kanäle und den Multicode-Rake-Fingern (10; 100) bewirken, aufweist,
ein Multicode-Rake-Finger (10; 100) jeweils

- eine Einheit (12, 13, 20, 21) zur Einstellung der gemeinsamen Wegeverzögerung für den Multicode-Rake-Finger (10; 100) und
- eine Mehrzahl parallel angeordneter Korrelatoren (14.1-4; 114.1-2), mittels welchen der diesem Rake-Finger (10; 100) zugeordnete Ausbreitungsweg der übertragenen Signale parallel mit mehreren Spreizcodes demoduliert werden kann,

umfasst, wobei
die Mittel Nutzdatenkanäle, insbesondere einen oder mehrere der im UMTS-Standard spezifizierten physikalischen Kanäle DPCH und PDSCH, stets dem oder den ersten Multicode-Rake-Fingern (10) zuteilen und Kontrollinformationskanäle, insbesondere einen oder mehrere der im UMTS-Standard spezifizierten physikalischen Kanäle PCCPCH, AICH und PICH, stets dem oder den zweiten Multicode-Rake-Fingern (100) zuteilen, wobei jeder Multicode-Rake-Finger (10; 100) einen Pilotsignal-Korrelator (14.4; 114.2) aufweist, welchem das Mittel zum Zuordnen der zu demodulierenden Signale einen Spreizcode zur Demodulation von Pilotdaten eines übertragenen Pilotsignals zuordnet, während der bzw. die restlichen Korrelatoren (14.1-3; 114.1) jedes Multicode-Rake-Fingers (10; 100) mit einem Spreizcode bzw. mit Spreizcodes zur Demodulation von unbekannten Daten betrieben werden, und wobei der Rake-Demodulator,

- einen ersten Multicode-Rake-Finger (10) umfasst, dessen restliche Korrelatoren (14.1-3) mit Spreizcodes variabler Spreizfaktoren betreibbar sind, und

- einen zweiten Multicode-Rake-Finger (100) umfasst, der einen restlichen Korrelator (114.1) umfasst, welcher mit Spreizcodes eines variablen Spreizfaktors betreibbar ist und dem von dem Mittel zum Zuordnen der zu demodulierenden Signale ein physikalischer Kontrollkanal mit variablem Spreizfaktor, insbesondere der im UMTS-Standard spezifizierte Kanal SCCPCH, zugeteilt werden kann.

2. Rake-Demodulator nach Anspruch 1,
**dadurch gekennzeichnet,**

- **dass** in den Signalwegen hinter den restlichen Korrelatoren (14.1-3; 114.1) jeweils eine Gewichtungseinheit (16.1-3; 116.1) zum Multiplizieren der Signale mit geschätzten wegespezifischen Kanalgewichten angeordnet ist, und
- **dass** im Signalweg hinter dem Pilotsignal-Korrelator (14.4, 114.2) keine Gewichtungseinheit vorgesehen ist.

3. Rake-Demodulator nach Anspruch 2,
**dadurch gekennzeichnet,**
**dass** der erste Multicode-Rake-Finger (10) den Pilotsignal-Korrelator (14.4) zur Rekonstruktion der Pilotdaten und mindestens drei restliche Korrelatoren (14.1-3) zur Rekonstruktion von unbekannten Daten umfasst.

4. Rake-Demodulator nach Anspruch 1,
**dadurch gekennzeichnet,**
**dass** der zweite Multicode-Rake-Finger (100) den Pilotsignal-Korrelator (114.2) zur Rekonstruktion der Pilotdaten und genau einen Korrelator (114.1) zur Rekonstruktion von unbekannten Daten umfasst.

5. Rake-Demodulator nach einem der vorhergehenden Ansprüche,
**dadurch gekennzeichnet,**
**dass** jedem Multicode-Rake-Finger (10, 100) ferner eine Einheit zur Schätzung von wegespezifischen Kanalgewichten (19; 119, 119') auf der Basis der rekonstruierten Pilotdaten zugeordnet ist.

6. Rake-Demodulator nach einem der vorhergehenden Ansprüche,
**dadurch gekennzeichnet,**
**dass** neben ersten und zweiten Multicode-Rake-Fingern (10, 100) ein Einzelcode-Rake-Finger (1000) mit einem einzigen Korrelator (114) und ohne eine Einheit zur Gewichtung der von dem Korrelator (114) erzeugten Daten zur Rekonstruktion von Pilotdaten eines Pilotsignals vorhanden ist.

7. Rake-Demodulator nach einem der vorhergehenden Ansprüche,
**dadurch gekennzeichnet,**
**dass** die gemeinsame Einheit (12, 13, 20, 21) zur Einstellung der Wegeverzögerung eine erste Stufe (12, 13) für eine Grobkompensation der Wegeverzögerung und eine zweite Stufe (20, 21), insbesondere einen Interpolator (21) umfassend, für eine Feinkompensation der Wegeverzögerung aufweist.

8. Rake-Demodulator nach Anspruch 7,
**dadurch gekennzeichnet,**
**dass** die gemeinsame Einheit (12, 13, 20, 21) zur Einstellung der Wegeverzögerung im Signalweg vor den Korrelatoren (14.1-4; 114.1-2) angeordnet ist.

9. Rake-Demodulator nach einem der vorhergehenden Ansprüche,
**dadurch gekennzeichnet,**
**dass** der erste Multicode-Rake-Finger (10) zur Rekonstruktion der Daten der im UMTS-Standard spezifizierten physikalischen Kanäle DPCH, PDSCH, sowie eines gemeinsamen Pilotkanals pCPICH und/oder sCPICH, vorgesehen ist.

10. Rake-Demodulator nach Anspruch 1,
**dadurch gekennzeichnet,**
**dass** der zweite Multicode-Rake-Finger (100) zur Rekonstruktion der Daten der im UMTS-Standard spezifizierten physikalischen Kanäle PCCPCH, SCCPCH, AICH und PICH, sowie eines gemeinsamen Pilotkanals pCPICH und/oder sCPICH, vorgesehen ist.

**11.** Rake-Demodulator nach Anspruch 1,
**dadurch gekennzeichnet,**
**dass** der Rake-Demodulator ausgelegt ist, in einem Leerlauf-Modus erste Multicode-Rake-Finger (10) und gegebenenfalls auch Einzelcode-Rake-Finger (1000) abzuschalten, während zweite Multicode-Rake-Finger (100) im Leerlauf-Modus aktiviert sind.

**12.** Rake-Demodulator nach Anspruch 6,
**dadurch gekennzeichnet,**
**dass** der Einzelcode-Rake-Finger (1000) ausschließlich zur Rekonstruktion von Pilotdaten eines gemeinsamen physikalischen Pilotkanals, insbesondere der im UMTS-Standard spezifizierten gemeinsamen Pilotkanäle pCPICH und/oder sCPICH, vorgesehen ist.

**13.** Rake-Empfänger, mit

- einem Rake-Demodulator nach einem der vorhergehenden Ansprüche, wobei den Korrelatoren (14.1-4; 114.1-2) des oder der Multicode-Rake-Finger (10; 100) durch Programmierung bestimmte Spreizcodes zugeordnet werden können, und
- einem Prozessor (DSP), welcher durch Abarbeitung eines Datenverarbeitungsprogramms eine Programmierung der Korrelatoren (14.1-4; 114.1-2) der Multicode-Rake-Finger (10; 100) ermöglicht.

**14.** Rake-Empfänger nach Anspruch 13,
**dadurch gekennzeichnet,**
**dass** das Datenverarbeitungsprogramm ausgelegt ist, einen ersten Multicode-Rake-Finger (10) maximal einmal pro Zeitrahmen umzuprogrammieren.

**15.** Rake-Empfänger nach Anspruch 13 oder 14,
**dadurch gekennzeichnet,**
**dass** das Datenverarbeitungsprogramm ausgelegt ist, einen zweiten Multicode-Rake-Finger (100) mehrfach innerhalb eines Zeitrahmens zur Erzeugung von Daten für Mess- und/oder Überwachungszwecke umzuprogrammieren.

**16.** Rake-Empfänger nach Anspruch 15,
**dadurch gekennzeichnet,**
**dass** der zweite Multicode-Rake-Finger (100) eine vordefinierte und von dem Prozessor (DSP) programmierte Aufgabenliste ohne Wechselwirkung mit dem Prozessor (DSP) selbstständig abarbeiten kann und die Ergebnisse nach Beendigung der Abarbeitung der Aufgabenliste vom Prozessor (DSP) abrufbar sind.

**Claims**

**1.** Rake demodulator for demodulating spread-coded signals, which are subject to multipath propagation, from a plurality of physical channels, which rake demodulator has a plurality of rake fingers arranged parallel to one another, wherein during operation a rake finger is associated with a single propagation path, wherein the rake demodulator has at least one or a plurality of first and one or more second multicode rake fingers (10; 100) and means which prompt an association between the signals from the different physical channels and the multicode rake fingers (10; 100),
a multicode rake finger (10; 100) respectively comprises

- a unit (12, 13, 20, 21) for setting the common path delay for the multicode rake finger (10; 100) and
- a plurality of correlators (14.1-4; 114.1-2) arranged in parallel which can be used to demodulate the propagation path of the transmitted signals which is associated with this rake finger (10; 100) in parallel using a plurality of spread codes,

wherein
the means assign user data channels, particularly one or more of the physical channels DPCH and PDSCH specified in the UMTS standard, always to the or to the first multicode rake finger(s) (10) and assign control information channels, particularly one or more of the physical channels PCCPCH, AICH and PICH specified in the UMTS standard, always to the or to the second multicode rake finger(s) (100), wherein
each multicode rake finger (10; 100) has a pilot signal correlator (14.4; 114.2) to which the means for allocating the signals that are to be demodulated allocates a spread code for demodulating pilot data from a transmitted pilot signal, while the or the remaining correlator(s) (14.1-3; 114.1) in each multicode rake finger (10; 100) is/are operated using a spread code or using spread codes for demodulating unknown data, and wherein the rake demodulator

- comprises a first multicode rake finger (10), the remaining correlators (14.1-3) in which can be operated using spread codes having variable spread factors, and
- comprises a second multicode rake finger (100), which comprises a remaining correlator (114.1) which can be operated using spread codes having a variable spread factor and to which the means for allocating the signals that are to be demodulated can assign a physical control channel having a variable spread factor, particularly the channel SCCPCH specified in the UMTS standard.

2. Rake demodulator according to Claim 1, **characterized**

- **in that** the signal paths downstream of the remaining correlators (14.1-3; 114.1) each contain a weighting unit (16.1-3; 116.1) for multiplying the signals by estimated path-specific channel weights, and
- **in that** the signal path downstream of the pilot signal correlator (14.4, 114.2) does not contain a weighting unit.

3. Rake demodulator according to Claim 2,
**characterized**
**in that** the first multicode rake finger (10) comprises the pilot signal correlator (14.4) for reconstructing the pilot data and at least three remaining correlators (14.1-3) for reconstructing unknown data.

4. Rake demodulator according to Claim 1,
**characterized**
**in that** the second multicode rake finger (100) comprises the pilot signal correlator (114.2) for reconstructing the pilot data and precisely one correlator (114.1) for reconstructing unknown data.

5. Rake demodulator according to one of the preceding claims,
**characterized**
**in that** each multicode rake finger (10, 100) also has an associated unit for estimating path-specific channel weights (19; 119, 119') on the basis of the reconstructed pilot data.

6. Rake demodulator according to one of the preceding claims,
**characterized**
**in that** besides first and second multicode rake fingers (10, 100) there is a single-code rake finger (1000) having a single correlator (114) and without a unit for weighting the data produced by the correlator (114) for reconstructing pilot data from a pilot signal.

7. Rake demodulator according to one of the preceding claims,
**characterized**
**in that** the common unit (12, 13, 20, 21) for setting the path delay has a first stage (12, 13) for coarse compensation for the path delay and a second stage (20, 21), particularly comprising an interpolator (21), for fine compensation for the path delay.

8. Rake demodulator according to Claim 7,
**characterized**
**in that** the common unit (12, 13, 20, 21) for setting the path delay is arranged in the signal path upstream of the correlators (14.1-4; 114.1-2).

9. Rake demodulator according to one of the preceding claims,
**characterized**
**in that** the first multicode rake finger (10) is provided for reconstructing the data from the physical channels DPCH, PDSCH specified in the UMTS standard, and also from a common pilot channel pCPICH and/or sCPICH.

10. Rake demodulator according to Claim 1,
**characterized**
**in that** the second multicode rake finger (100) is provided for reconstructing the data from the physical channels PCCPCH, SCCPCH, AICH and PICH specified in the UMTS standard, and also from a common pilot channel pCPICH and/or sCPICH.

**11.** Rake demodulator according to Claim 1,
**characterized**
**in that** the rake demodulator is designed to switch off first multicode rake fingers (10) and possibly also single-code rake fingers (1000) in an idle mode, while second multicode rake fingers (100) are activated in the idle mode.

**12.** Rake demodulator according to Claim 6,
**characterized**
**in that** the single-code rake finger (1000) is provided exclusively for reconstructing pilot data from a common physical pilot channel, particularly from the common pilot channels pCPICH and/or sCPICH specified in the UMTS standard.

**13.** Rake receiver, having

- a rake demodulator according to one of the preceding claims, wherein the correlators (14.1-4; 114.1-2) in the multicode rake finger(s) (10; 100) can be allocated particular spread codes by programming, and
- a processor (DSP) which allows the correlators (14.1-4; 114.1-2) in the multicode rake fingers (10; 100) to be programmed by executing a data processing program.

**14.** Rake receiver according to Claim 13,
**characterized**
**in that** the data processing program is designed to reprogram a first multicode rake finger (10) no more than once per time frame.

**15.** Rake receiver according to Claim 13 or 14,
**characterized**
**in that** the data processing program is designed to reprogram a second multicode rake finger (100) multiple times within a time frame in order to produce data for measurement and/or monitoring purposes.

**16.** Rake receiver according to Claim 15,
**characterized**
**in that** the second multicode rake finger (100) can independently execute a predefined task list programmed by the processor (DSP) without interacting with the processor (DSP), and the results can be retrieved by the processor (DSP) following termination of the execution of the task list.

**Revendications**

**1.** Démodulateur rake pour la démodulation de signaux codés en étalement sous-jacents à la propagation par trajets multiples, qui comporte une multiplicité de doigts rake disposés parallèlement entre eux, dans lequel en fonctionnement un doigt rake est associé à un trajet de propagation individuel, dans lequel
le démodulateur rake comporte au moins un ou plusieurs premiers et un ou plusieurs deuxièmes doigts (10 ; 100) rake multicodes et des moyens qui provoquent une association entre les signaux des divers canaux physiques et les doigts (10 ; 100) rake multicodes,
un doigt (10 ; 100) rake multicode comprenant respectivement

- une unité (12, 13, 20, 21) de réglage du retard de trajet commun pour les doigts (10 ; 100) rake multicodes, et
- une multiplicité de corrélateurs (14.1-4 ; 114.1-2) montés en parallèle, au moyen desquels le trajet de propagation, associé à ce doigt (10 ; 100) rake des signaux transmis, peut être démodulé en parallèle par plusieurs codes d'étalement dans lequel,

les moyens attribuent des canaux de données utiles, notamment un ou plusieurs des canaux DPCH et PDSCH physiques spécifiés dans la norme UMTS, toujours au premier doigt (10) rake multicode ou aux premiers doigts (10) rake multicodes et attribuent des canaux d'informations de contrôle, notamment un ou plusieurs des canaux PCCPCH, AICH et PICH physiques spécifiés dans la norme UMTS, toujours au deuxième doigt (10) rake multicode ou aux deuxièmes doigts (100) rake multicodes, dans lequel
chaque doigt (10 ; 100) rake multicode comporte un corrélateur (14.4 ;114.2) de signal pilote, auquel le moyen d'association des signaux à démoduler associe un code d'étalement pour la démodulation de données pilotes d'un signal pilote à transmettre, tandis que le ou les corrélateurs (14.1-3 ; 114.1) restant de chaque doigt (10 ; 100) rake multicode fonctionne avec un code d'étalement ou avec des codes d'étalement pour la démodulation de données inconnues, et dans lequel le démodulateur rake

- comprend un premier doigt (10) rake multicode, dont les corrélateurs (14.1-3) restant peuvent fonctionner avec des codes d'étalement à facteurs d'étalement variables, et
- comprend un deuxième doigt (100) rake multicode, qui comprend un corrélateur (114.1) restant qui peut fonctionner avec des codes d'étalement à facteur d'étalement variable et auquel il peut être attribué, par le moyen d'association des signaux à démoduler, un canal de contrôle physique à facteur d'étalement variable, notamment le canal SCCPCH spécifié dans la norme UMTS.

2. Démodulateur rake suivant la revendication 1,
   **caractérisé**

- **en ce que** dans les trajets du signal derrière les corrélateurs (14.1-3 ; 114.1) restant est montée respectivement une unité (16.1-3 ; 116.1) de pondération pour multiplier des signaux par des pondérations de canal estimées être spécifiques au trajet, et
- **en ce que**, dans le trajet du signal derrière le corrélateur (14.4 ; 114.2) du signal pilote, il n'est pas prévu d'unité de pondération.

3. Démodulateur rake suivant la revendication 2,
   **caractérisé en ce que**
   le premier doigt (10) rake multicode comprend le corrélateur (14.4) de signal pilote pour la reconstruction des données pilotes et au moins trois corrélateurs (14.1-3) restant pour la reconstruction de données inconnues.

4. Démodulateur rake suivant la revendication 1,
   **caractérisé en ce que**
   le deuxième doigt (100) rake multicode comprend le corrélateur (114.2) de signal pilote pour la reconstruction des données pilotes et exactement un corrélateur (114.1) pour la reconstruction de données inconnues.

5. Démodulateur rake suivant l'une des revendications précédentes,
   **caractérisé en ce que**
   à chaque doigt (10 ; 100) rake multicode est associée en outre une unité d'évaluation de pondérations (19 ; 119, 119') de canal spécifiques au trajet sur la base des données pilotes reconstruites.

6. Démodulateur rake suivant l'une des revendications précédentes,
   **caractérisé en ce que**
   à côté des premiers et deuxièmes doigts (10 ; 100) rake multicodes il y a, pour la reconstruction de données pilotes d'un signal pilote, un doigt (1000) rake de code individuel, ayant un corrélateur (114) unique et sans une unité de pondération des données produites par le corrélateur (114).

7. Démodulateur rake suivant l'une des revendications précédentes,
   **caractérisé en ce que**
   l'unité (12, 13, 20, 21) commune pour le réglage du retard du trajet comporte un premier étage (12, 13) pour une compensation grossière du retard du trajet et un deuxième étage (20, 21), comprenant notamment un interpolateur (21), pour une compensation fine du retard du trajet.

8. Démodulateur rake suivant la revendication 7,
   **caractérisé en ce que**
   l'unité (12, 13, 20, 21) commune pour le réglage du retard du trajet est disposée dans le trajet du signal avant les corrélateurs (14.1-4 ; 114.1-2).

9. Démodulateur rake suivant l'une des revendications précédentes,
   **caractérisé en ce que**
   le premier doigt (10) rake multicode est prévu pour la reconstruction des données des canaux DPCH, PDSCH physiques spécifiées dans la norme UMTS, ainsi que d'un canal pCPICH et/ou sCPICH pilote commun.

10. Démodulateur rake suivant la revendication 1,

**caractérisé en ce que**
le deuxième doigt (100) rake multicode est prévu pour la reconstruction des données des canaux PCCPCH, SCCPCH, AICH et PICH physiques spécifiés dans la norme UMTS, ainsi que d'un canal pCPICH et/ou sCPICH pilote commun.

11. Démodulateur rake suivant la revendication 1,
**caractérisé en ce que**
le démodulateur rake est conçu pour, dans un mode de marche à vide, déconnecter des premiers doigts (10) rake multicodes et, le cas échéant aussi, des doigts (1000) rake de code individuels, tandis que des deuxièmes doigts (100) rake multicodes sont activés dans le mode de marche à vide.

12. Démodulateur rake suivant la revendication 6,
**caractérisé en ce que**
le doigt (1000) rake de code individuel est prévu exclusivement pour la reconstruction de données pilotes d'un canal pilote physique commun, notamment des canaux pCPICH/sCPICH pilotes communs spécifiés dans la norme UMTS.

13. Récepteur rake comprenant

- un démodulateur rake suivant l'une des revendications précédentes, des codes d'étalement déterminés pouvant être associés par programmation aux corrélateurs (14.1-4 ; 114.1-2) du ou des doigts (10 ; 100) rake multicodes, et
- un processeur (DSP) qui permet, par exécution d'un programme informatique, de programmer les corrélateurs (14.1-4 ; 114.1-2) des doigts (10 ; 100) rake multicodes.

14. Récepteur rake suivant la revendication 13,
**caractérisé en ce que**
le programme informatique est conçu pour reprogrammer au maximum une fois par trame temporelle un premier doigt (10) rake multicode.

15. Récepteur rake suivant la revendication 13 ou 14,
**caractérisé en ce que**
le programme informatique est conçu pour reprogrammer un deuxième doigt (100) rake multicode plusieurs fois dans une trame temporelle pour la production de données à des fins de mesure et/ou de contrôle.

16. Récepteur rake suivant la revendication 15,
**caractérisé en ce que**
le deuxième doigt (100) rake multicode peut dresser, automatiquement et sans interaction avec le processeur (DSP), une liste de tâches définie à l'avance et programmée par le processeur (DSP) et les résultats peuvent, après que la liste des tâches est dressée, être appelés par le processeur (DSP).

Fig.1

Fig.2

Fig.3

$$a_{k,j,h}, \quad j=1,2,3$$

Fig.4

Fig.5

Messwerte
(Pilotkanal)

Fig.6

EP 1 504 541 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1178614 A2

### In der Beschreibung aufgeführte Nicht-Patentliteratur

- **T.OJANPERÄ ; R. PRASAD.** Wideband CDMA for Third Generation Mobile Communications. ARTECH HOUSE, 1998, vol. 283, 127-129